Europäisches Patentamt

European Patent Office

Office européen des brevets

(19)

(11) Veröffentlichungsnummer: **0 009 627**
B1

(12) **EUROPÄISCHE PATENTSCHRIFT**

(45) Veröffentlichungstag der Patentschrift: **18.01.84**

(51) Int. Cl.³: **H 04 N 1/00, H 04 L 11/16**

(21) Anmeldenummer: **79103207.1**

(22) Anmeldetag: **29.08.79**

(54) Übertragungssystem zum Fernkopieren und zur elektronischen Übermittlung von Hauspost.

(30) Priorität: **29.09.78 DE 2842647**

(43) Veröffentlichungstag der Anmeldung:
**16.04.80 Patentblatt 80/8**

(45) Bekanntmachung des Hinweises auf die Patenterteilung:
**18.01.84 Patentblatt 84/3**

(84) Benannte Vertragsstaaten:
**AT BE CH FR GB IT NL SE**

(56) Entgegenhaltungen:
**FR - A - 2 315 725
US - A - 4 058 838**

**IEEE TRANSACTIONS ON COMMUNICATIONS
Vol. COM-22, Nr. 6, Juni 1974, New York, US,
E.R. HAFNER et al.: "A digital loop
communication system", Seiten 877-881
THE BELL SYSTEM TECHNICAL JOURNAL, Vol.
50, Nr. 9, November 1971, New York, US, J.F.
HAYES et al.: "Traffic analysis of a ring switched
data transmission system", Seiten 2947-2978**

(73) Patentinhaber: **SIEMENS AKTIENGESELLSCHAFT
Berlin und München Wittelsbacherplatz 2
D-8000 München 2 (DE)**

(72) Erfinder: **Schwärtzel, Heinz, Dipl.-Math.
Staudinger Strasse 55
D-8000 München 83 (DE)**
Erfinder: **Unterberger, Hans, Dr.
Groschenweg 48a
D-8000 München 82 (DE)**

# 0 009 627

Übertragungssystem zum Fernkopieren und zur elektronischen Übermittlung von Hauspost

Die Erfindung betrifft ein Übertragungssystem zum Fernkopieren und zur elektronischen Übermittlung von Hauspost.

Fernkopieren zur Übermittlung von Schriftgut mit Dokumentenausgabe am Empfangsort gewinnt wegen seiner vielfältigen Anwendungsmöglichkeiten immer mehr an Bedeutung. Bei geeigneter Gestaltung kann innerhalb eines Unternehmens oder einer Behörde dasselbe System zum Fernkopieren und zur Zustellung von Hauspost verwendet werden.

Aus der Zeitschrift IEEE Transactions COM—22 (1974) 6 (Juni) 877—881 ist ein Übertragungssystem für beliebige Arten von Informationssignalen, darunter für Faksimile-signale, und für Fernschreibsignale insb. innerhalb eines Hauses bekannt. Dieses bekannte System weist eine Ringstruktur mit einer jedem Endgerät zugeordneten Einspeise- und Abzweigvorrichtung auf. Die zu übertragenden Informationen werden in Päckchen dargeboten und in Blocks übertragen und diese enthalten zusätzlich Abschnitte für Senderadressen. Die Informationseinspeisung erfolgt in diesem bekannten System in einen aufgesuchten freien Zeitschlitz. Die teilnehmerseitige Informationsentnahme erfolgt bei Adresserkennung bzw. die Wiedereinspeisung erfolgt bei Nichtadresserkennunç.

Aus The Bell System Technical Journal 50 (1971) 9 (11) 2947—2978, insb. Seite 2951 (Fig. 3) ist ein Ringleitungs-Informationsübertragungssystem bekannt, bei dem auf einer Ringleitung Information zwischen an sie angeschlossenen Teilnehmern austauschbar ist. Aus FR-A-2315725, ist ein Ringleitungssystem bekannt, das durch Lichtwellenleiter realisiert ist.

Der Erfindung liegt die Aufgabe zugrunde, ein Übertragungssystem zu schaffen, mittels dessen innerhalb eines bestimmten Bereiches bei unbedientem Empfang und gezielter Zustellung Dokumente an bestimmte Adressaten unter geringem Zeitaufwand zu übermitteln sind. Dabei soll außerdem sowohl eine Übermittlung derselben Information an mehrere Teilnehmer als auch die Zustellung mehrerer Kopien an einen einzigen Teilnehmer ermöglicht sein. Die Sicherheit des Systems in bezug auf das Erreichen des jeweils betreffenden Teilnehmers und die Geheimhaltung muß der einer Hauspost entsprechen.

Die der Erfindung zugrunde liegende Aufgabe wird ausgehend von einem aus der erstgenannten Zeitschrift bekannten System durch ein Übertragungssystem zum Fernkopieren und zur elektronischen Übermittlung von Hauspost mit zumindest einer Zentrale und mehreren Teilnehmerendgeräten, bei dem mittels jeder einzelnen Zentrale und jedem einzelnen Teilnehmerendgerät individuell zugeordneter Einspeise-/Abzweigvorrichtung die Zentralen und die Teilnehmerendgeräte über eine Ringleitung miteinander verbunden sind, so daß Kommunikationen in beliebigen Konfigurationen ermöglicht sind, in dem alle zu übertragenden Informationen gemäß einem festgelegten Rahmenraster aufgebaut sind, wobei ein in einem dementsprechenden Rahmen enthaltener Informationsblock mehrere erste Abschnitte für jeweils zumindest eine Empfängeradresse, mehrere zweite Abschnitte für jeweils eine Senderadresse und mehrere laufende Informationen betreffende Abschnitte aufweist, in dem zur Informationsübertragung die betreffende sendende Einrichtung einen freien Zeitschlitz aufsucht und den zu sendenden Informationsblock über die ihr zugeordnete Einspeise-/Abzweigvorrichtung in die Ringleitung einspeist und in dem die in Informationstransportrichtung jeweils folgende Einspeise-/Abzweigvorrichtung den Informationsblock abzweigt und bei Erkennen der ihr zugeordneten Empfängeradresse dem Informationsfluß entnimmt und dem mit ihr gekoppelten Teilnehmerendgerät übergibt oder bei Erkennen einer ihr nicht zugeordneten Empfängeradresse wieder in die Ringleitung einspeist, gelöst, das dadurch gekennzeichnet ist, daß zwecks Übermittlung einer Information an mehrere Teilnehmer anstelle einer individuellen Empfängeradresse eine Kombinationsempfängeradresse im Informationsblock vorgesehen ist, daß die Kombinationsempfängeradresse den Zeicheninhalt betreffend so aufgebaut ist, daß jeweils vor Weitergabe des Informationsblockes an die Ringleitung die Individuelle Empfängeradresse der gerade empfangenden Einrichtung aus der Kombinationsempfängeradresse entnehmbar ist und die weiteren individuellen Empfängeradressen bzw. die weitere individuelle Empfängeradresse in der weiterzugebenden Kombinationsempfängeradresse erhalten bleiben bzw. bleibt.

Die Erfindung bietet den Vorteil, daß ein einfaches, ohne jegliche zentrale vermittlungstechnische Einrichtungen auskommendes Übertragungssystem zur Verfügung steht, bei dem jedes Endgerät mit jedem weiteren Endgerät kommunizieren kann. Darüber hinaus ist es vorteilhaft, daß ein beliebiger Absender über den Betriebszustand des jeweiligen adressierten Empfängers informiert ist. Findet nämlich ein Absender in der bei ihm vorbeikommenden Information die Adresse des gewünschten Teilnehmers und seine eigene Adresse in unverändertem Zustand wieder, so kann er daraus schließen, daß der andere Teilnehmer entweder nicht betriebsbereit ist oder gerade die Information eines anderen Absenders entgegennimmt.

Weiterbildungen der Erfindung sind durch die in den abhängigen Ansprüchen angegebenen Merkmale gekennzeichnet.

Im folgenden soll die Erfindung anhand mehrerer, Ausführungsbeispiele für die Erfindung betreffender Figuren erläutert werden.

Fig. 1 zeigt schematisch den Aufbau und die Wirkungsweise des erfindungsgemäßen Übertragungssystems,

2

Fig. 2 zeigt schematisch den Aufbau des Übertragungssystems gemäß einer Weiterbildung der Erfindung.

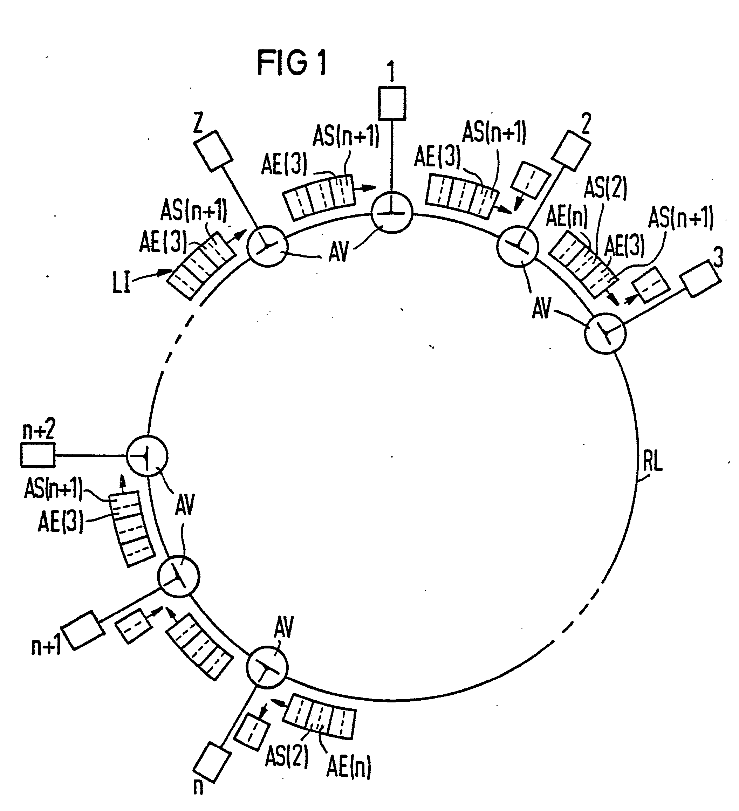

Wie bereits erwähnt, zeigt Fig. 1 schematisch den Aufbau und die Wirkungsweise des erfindungsgemäßen Übertragungssystems.

In eine Ringleitung RL sind den Teilnehmerendgeräten 1,2,3...n, n+1, n+2 individuell zugeordnete Einspeise-/Abzweigvorrichtungen AV eingeschleift. Mit Z ist eine Zentrale bezeichnet, die betriebsmäßig im wesentlichen wie die einzelnen Teilnehmer zu bewerten ist. Die umlaufenden Informationen sind gemäß einem festgelegten Rahmenraster als Informationsblöcke aufgebaut, die einen oder mehrere erste Abschnitte für jeweils zumindest eine Empfängeradresse AE, einen oder mehrere Abschnitte für jeweils eine Senderadresse AS und mehrere Abschnitte für die jeweils laufende Information LI haben. In Fig. 1 ist gezeigt, wie eine Information vom Teilnehmerendgerät n+1 zum Teilnehmerendgerät 3 und eine weitere Information vom Teilnehmerendgerät 2 zum Teilnehmerendgerät n übertragen werden. Die Einspeise-/Abzweigvorrichtungen AV zweigen einen von einer in Informationstransportrichtung vor ihnen liegenden Einspeise-/Abzweigvorrichtung kommenden Informationsblock ab, bewerten die Empfängeradresse und geben die mitgelieferte Information bei Erkennen der eigenen Adresse an das zugeordnete Teilnehmerendgerät weiter oder speisen die betreffende Information bei Nichterkennen der eigenen Adresse wieder in die Ringleitung RL ein. Alle umlaufenden Informationsblöcke werden also in der durch die Ringstruktur vorgegebenen Reihenfolge von allen Einspeise-/Abzweigvorrichtungen AV nach der sendenden Einrichtung bis zur empfangenden Einrichtung abgezweigt und adressenmäßig bewertet.

Soll von einem Teilnehmer zu einem anderen Information übertragen werden, so wird von dem Teilnehmerendgerät ein freier Übertragungskanal, d.h. Zeitschlitz, in einem Rahmen gesucht. Die in einem Zeitschlitz übertragbare Information wird mit der Adresse des Empfängers und Senders versehen und in den freien Zeitschlitz übertragen. Wegen der Ringstruktur ist dadurch schon gewährleistet, daß sie auch den gewünschten Teilnehmer erreicht. Die Adresse des Absenders, dessen Information der Ringleitung entnommen wird, muß beim Empfänger gespeichert werden, damit sich nicht die Information mehrerer Absender beim Empfänger vermischen kann. Solange der Empfänger von diesem Absender nicht mitgeteilt bekommt, daß die Übertragung beendet ist, kann er der Ringleitung nur die Information entnehmen, die mit seiner eigenen Adresse und der bei ihm gespeicherten Absenderadresse gekennzeichnet ist.

Erhält der Empfänger die Information über die Beendigung der Übertragung, so löscht, er den Inhalt des Absenderadressenspeichers und wird dadurch wieder frei für den Empfang von Information anderer Teilnehmer.

Soll auch unbedienter Empfang möglich sein, so muß die Einrichtung für die Erkennung der Teilnehmeradresse fortwährend in Betrieb sein. Wird die Adresse des Teilnehmers erkannt, so schaltet sich die Ausgabeeinrichtung automatisch ein.

Für die Zustellung derselben Information an mehrere Teilnehmer gibt es an sich zwei Möglichkeiten. Die Erfindung verwendet einen Umlauf der Information mit mehreren Empfängeradressen: Die Information wird beim Sender mit den Adressen aller Empfänger versehen, für die die Information bestimmt ist. Erkennt ein Empfänger seine Adresse, so entnimmt er der Ringleitung die Information und löscht seine eigene Adresse; der letzte Empfänger löscht sowohl seine Adresse als auch die Information. Der jeweilige Zeitschlitz wird dadurch frei für andere Übertragungen. Erreicht die Information wieder den Absender, so kann diese aus den noch nicht gelöschten Adressen schließen, welche Teilnehmer die Information noch nicht erhalten haben. Diese Methode ist für die Belastung der Übertragungsstrecke und des Sendegerätes sehr günstig, stellt an die Adressierung aber sehr hohe Anforderungen, denn der Nutzinformationsinhalt eines Zeitschlitzes kann sich wegen der zusätzlichen Adressen erheblich verringern.

Kann eine geeignete Adressierung gefunden werden, so ist die genannte Methode am besten für die Verteilung von Information geeignet; unter Umständen ist aber auch eine Kombination mit einer zweiten Methode denkbar, nämlich dann, wenn ein geeignetes Adressierungsverfahren nur für wenige Teilnehmer gefunden werden kann. Die zweite, an sich bekannte Methode besteht aus einer automatischen Wiederholung: Beim Sender wird eingegeben, welche Teilnehmer die jeweilige Information erhalten sollen. Die Adressen werden gespeichert und dann der Reihe nach abgearbeitet, wobei jeder Informationsblock mit nur einer Empfängeradresse versehen ist. Die Übertragung wird entsprechend dem oben Ausgeführten durchgeführt. Für das Sendegerät und die Übertragungsstrecke stellt diese Lösungsmöglichkeit eine große Belastung dar, da sich die Übertragungsdauer bei vielen Adressen erheblich verlängern kann, dafür entstehen aber keine Probleme bezüglich der Adressierung.

Ein Teilnehmerendgerät wird zweckmäßigerweise von mehreren Personen in Anspruch genommen, daher ist es oft wünschenswert, daß von einem Teilnehmerendgerät gleich mehrere Kopien ausgegeben werden können. Diese Aufgabenstellung kann mit zwei verschiedenen Methoden gelöst werden.

a) Mehrfachkopien durch Wiederholung beim Sender. Die einfachste Lösung wäre, das jeweilige Dokument so oft wie gewünscht vom Sender zum Empfänger zu übertragen. Dafür ist nur eine Eingabevorrichtung für die Anzahl der Kopien beim Sender erforderlich, die Wiederholung der Sendung kann automatisch erfolgen. Der Nachteil dieser Methode besteht darin, daß der

0 009 627

Sender über längere Zeit für andere Zwecke blockiert ist und die Leitungen stark belastet werden.

b) Mehrfachkopien durch Wiederholung beim Empfänger. Beim Sender wird die Information mit der Adresse des Empfängers und mit einer Angabe über die Anzahl der gewünschten Kopien versehen. Beim Empfänger wird die ankommende Information gespeichert und nach Beendigung der Übertragung die gewünschte Anzahl der Kopien ausgegeben. Bei dieser Methode werden Sendegerät und Leitung genauso wenig wie bei der Übertragung einer Kopie beansprucht, dafür ist aber ein Speicher notwendig, mit dem mindestens $10^6$ Bit gespeichert werden können.

Nur bei Erfüllung bestimmter Sicherheitsansprüche des Anwenders hat das System Aussichten, eingesetzt zu werden. Grundsätzlich müssen diese Sicherheitsansprüche genauso gut wie bei der Hauspost erfüllt werden. Zwei Arten von Sicherheit können dabei unterschieden werden.

a) Erreichchen des Teilnehmers.

Die zu übertragende Information wird in mehreren Rahmen übertragen, dadurch kann bei Zerstörung, Verlust oder Nichterkennen eines Rahmens nicht die gesamte Information verloren gehen. Durch geeignete Maßnahmen, z.B. Numerierung der Informationsblöcke, kann auch vom Empfänger der Verlust eines oder mehrerer Informationsblöcke erkannt und erneute Übertragung verlangt werden. Außerdem müssen die Adressen so gewählt werden, daß sie von den Empfängern nicht verwechselt werden können, durch redundante Codierungsverfahren läßt sich das relativ einfach erreichen.

b) Geheimhaltung.

Durch strenge Zuordnung von Adressen zu den Empfangsstationen und redundante Codierungsverfahren kann das Übertragungssystem gegen unbefugtes Abhören abgesichert werden. Die Qualität des Schutzes ist sehr stark von dem Aufwand, der betrieben wird, abhängig und kann dem jeweiligen Einsatz angepaßt werden. Um die Sicherheit von Hauspost zu erreichen, ist aber nur relativ geringer Aufwand notwendig.

Durch die Anforderungen an Übertragungsqualität und Übertragungsdauer wird die für den Dienst bereitzustellende Bandbreite festgelegt.

Eine Norm-A4-Seite enthält bei einer schwarz/weiß-Übertragung und einer Auflösung von 3,8 Punkten pro mm ungefähr $10^6$ Bit. Bei einer Übertragungszeit von 10 s pro Kopie ergibt sich somit eine Bandbreitenforderung von 100 kBit/s pro Übertragungskanal.

Diese Bandbreite kann durch Reduktionsalgorithmen um Faktoren zwischen 2 und 10 verringert werden. Da aber bei eventueller Forderung nach Übertragung von Grautönen oder Farbe die Bandbreite größer sein muß als 100 kBit/s, soll im folgenden der Wert von 100 kBit/s als typisch für die Bandbreite eines Fernkopierkanals beibehalten werden.

Durch die Anzahl der Teilnehmer wird die erforderliche Übertragungskapazität festgelegt und durch diese wiederum die Art der verwendeten Leitungen. Legt man als Übertragungsgeschwindigkeit zwischen zwei Teilnehmern 100 kBit/s (siehe oben) fest, so ist sofort ersichtlich, daß mit elektrischen Verfahren relativ hoher Aufwand betrieben werden muß, um eine größere Anzahl von Übertragungskanälen zur Verfügung stellen zu können. Mit neuen Technologien, wie z.B. der Übertragung mit Lichtwellenleitern, kann eine große Anzahl von Übertragungskanälen bereitgestellt werden.

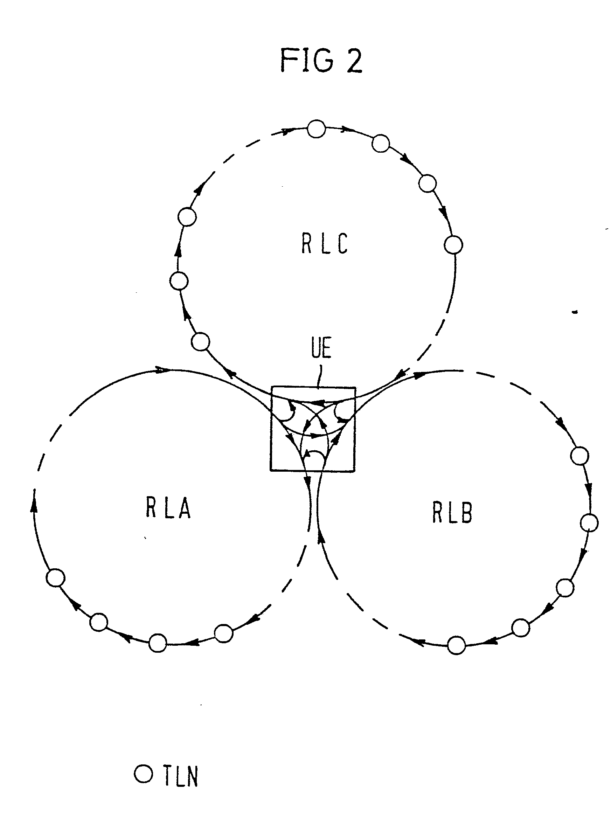

Mit Lichtwellenleitern wird in Zukunft eine wirtschaftliche Übertragung von bis zu 100 MBit/s ohne weiteres möglich sein. Selbst wenn man für organisatorische Aufgaben, wie z.B. Adressen, Rahmenkennung, die Hälfte der zur Verfügung stehenden Bitrate verwendet, verbleiben für die Informationsübertragung noch 500 Übertragungskanäle. Legt man jeder Teilnehmerstation einen Verkehr von 0,06 Erl. zugrunde, so können bei Verlusten von 1% bis zu 8000 Teilnehmerstationen angeschlossen werden; selbst bei einem Verkehrsaufkommen von 0,3 Erl. pro Teilnehmerstation können noch bis zu 1600 an einen solchen Lichtwellenleiter angeschlossen werden. Reicht die Übertragungskapazität eines Lichtleiters nicht aus, so müssen die Teilnehmer TLN gemäß Fig. 2 in mehreren Ringen RLA, RLB, RLC zusammengefaßt werden. Diese Ringe sind untereinander mit Übergabestationen UE verbunden. Die Übergabestationen haben praktisch die gleichen Funktionen wie die Abzweigeinrichtungen bei den Teilnehmern, nämlich zu erkennen, welche Information in einen anderen Ring übergeben werden soll, und gegebenenfalls den Übertragungskanal wieder freizugeben.

Für die Übertragung ist es erforderlich, eine ausreichende Anzahl von Kanälen zur Verfügung zu stellen; entsprechend den verwendeten Leitungen können die bereits bekannten Verfahren wie Raum-, Zeit- und Frequenzmultiplex eingesetzt werden. Fernkopieren und elektronische Hauspost können grundsätzlich mit demselben Übertragungssystem realisiert werden.

**Patentansprüche**

1. Übertragungssystem zum Fernkopieren und zur elektronischen Übermittlung von Hauspost mit zumindest einer Zentrale (Z) und mehreren Teilnehmerendgeräten (1, 2, 3... n, n+1, n+2), bei dem mittels jeder einzelnen Zentrale und jedem einzelnen Teilnehmerendgerät individuell zugeordneter Einspeise-/Abzweigvorrichtung (AV) die Zentralen und die Teilnehmerend-geräte über eine Ringleitung

4

(RL) miteinander verbunden sind, so daß Kommunikationen in beliebigen Konfigurationen ermöglicht sind, in dem alle zu übertragenden Informationen gemäß einem festgelegten Rahmenraster ausgebaut sind, wobei ein in einem dementsprechenden Rahmen enthaltener Informationsblock mehrere erste Abschnitte für jeweils zumindest eine Empfängeradresse (AE), mehrere zweite Abschnitte für jeweils eine Senderadresse (AS) und mehrere laufende Informationen (LI) betreffende Abschnitte aufweist, in dem zur Informations-übertragung die betreffende sendende Einrichtung (zB 2, n+1) einen freien Zeitschlitz aufsucht und den zu sendenden Informationsblock über die ihr zugeordnete Einspeise-/Abzweigvorrichtung (AV) in die Ringleitung (RL) einspeist und in dem die in Informationstransportrichtung jeweils folgende Einspeise-/Abzweigvorrichtung (AV) den Informationsblock abzweigt und bei Erkennen der ihr zugeordneten Empfängeradresse (AE) dem Informationsfluß entnimmt und dem mit ihr gekoppelten Teilnehmerendgerät (z. B. n, 3) übergibt oder bei Erkennen einer ihr nicht zugeordneten Empfängeradresse (AE) wieder in die Ringleitung (RL) einspeist, dadurch gekennzeichnet, daß zwecks Übermittlung einer Information an mehrere Teilnehmer anstelle einer individuellen Empfängeradresse (AE) eine Kombinationsempfängeradresse im Informationsblock vorgesehen ist, daß die Kombinationsempfängeradresse den Zeicheninhalt betreffend so aufgebaut ist, daß jeweils vor Weitergabe des Informationsblockes an die Ringleitung (RL) die individuelle Empfängeradresse (AE) der gerade empfangenden Einrichtung (a. B. n, 3) aus der Kominationsempfängeradresse entnehmbar ist und die weiteren individuellen Empfängeradressen (AE) bzw. die weitere individuelle Empfängeradresse (AE) in der weiterzugebenden Kombinationsempfängeradresse erhalten bleiben bzw. bleibt.

2. Übertragungssystem nach Anspruch 1, dadurch gekennzeichnet, daß einem Empfänger Mehrfachkopien dadurch zu übermitteln sind, daß die betreffende Information der gewünschten Anzahl der Kopien entsprechend bei der sendenden Einrichtung wiederholt wird.

3. Übertragungssystem nach Anspruch 2, dadurch gekennzeichnet, daß die Wiederholung nach Eingabe eines entsprechenden Signals automatisch durchgeführt wird.

4. Übertragungssystem nach Anspruch 1, dadurch gekennzeichnet, daß einem Empfänger Mehrfachkopien dadurch zu übermitteln sind, daß die betreffende Information bei der empfangenden Einrichtung gespeichert und der gewünschten Anzahl der Kopien entsprechend mehrfach reproduziert wird.

5. Übertragungssystem nach Anspruch 4, dadurch gekennzeichnet, daß die mehrfachen Reproduktionen nach Empfang einer entsprechenden Zusatzinformation automatisch durchgeführt werden.

6. Übertragungssystem nach einem der vorhergehenden Ansprüche, dadurch gekennzeichnet, daß ein unbedienter Empfang durch die Teilnehmerendgeräte vorgesehen ist und daß für den unbedienten Empfang ein automatisches Ein- und Ausschalten mittels der empfangenen Information durchzuführen ist.

7. Übertragungssystem nach Anspruch 1, dadurch gekennzeichnet, daß die Ringleitung (RL) durch parallele Verlegung mehrerer Leitungen nach Art eines Raummultiplex-Übertragungssystems realisiert ist.

8. Übertragungssystem nach Anspruch 1, dadurch gekennzeichnet, daß die Ringleitung (RL) im Frequenzmultiplex-Verfahren betrieben wird.

9. Übertragungssystem nach Anspruch 1, dadurch gekennzeichnet, daß die Ringleitung (RL) im Zeitmultiplex-Verfahren betrieben wird.

10. Übertragungssystem nach Anspruch 1, dadurch gekennzeichnet, daß mehrere Ringleitungen (RLA, RLB, RLC) vorgesehen sind, auf denen jeweils Informationen zwischen an sie angeschlossenen Teilnehmern (TLN) austauschbar sind, und daß eine Übergabestation (UE) vorgesehen ist, mittels derer jede Ringleitung (RLA, RLB, RLC) mit jeder anderen Ringleitung kommunizieren kann.

11. Übertragungssystem nach einem der Ansprüche 1 oder 7 bis 10, dadurch gekennzeichnet, daß die Ringleitung (RL) bzw. die Ringleitungen (RLA, RLB, RLC) als Lichtwellenleiter realisiert ist bzw. sind.

## Revendications

1. Système de transmission, pour la télécopie et pour la transmission électronique du courrier intérieur comportant au moins un central (Z) et plusieurs postes terminaux d'abonnés (1,2,3... n, n+1, n+2), dans lequel les centraux et les appareils terminaux d'abonnés peuvent être reliés entre eux par l'intermédiaire d'une ligne annulaire (RL) au moyen d'un dispositif (AV) d'injection/de dérivation associé individuellement à chaque central individuel et à chaque appareil terminal d'abonné individuel, de sorte que des communications soient possibles suivant n'importe quelle configuration, et dans lequel toutes les informations devant être transmises sont structurées conformément à un réseau de trame fixe, un bloc d'informations contenu dans une trame correspondante possédant plusieurs premières sections pour respectivement au moins une adresse de récepteur (AE), plusieurs secondes sections pour respectivement une adresse d'émetteur (AS) et plusieurs sections concernant des informations courantes (LI), et dans lequel pour la transmission de l'information, le dispositif émetteur concerné (par exemple 2,n) recherche un créneau temporel libre et injecte le bloc d'informations devant être émis, par l'intermédiaire du dispositif (AV) d'injection/de dérivation, qui lui est associé, dans la ligne annulaire (RL), et dans lequel le dispositif (AV) d'injection/de dérivation situé en aval suivant la direction de transport de l'information, dérive le bloc d'informations et, lors de l'identification de l'adresse de réception (AE), qui lui est associée, prélève le flux d'informations et le retransmet à l'appareil terminal d'abonné (par exemple n,3), qui lui est accouplé, ou bien, lors de l'identification d'une adresse de récepteur (AE), qui ne lui est pas associée, injecte à nouveau ce flux d'informations dans la ligne annulaire (RL), caractérisé par le fait que, dans le but de réaliser la retransmission de l'information à plusieurs abonnés, il est prévu, au lieu d'une adresse de récepteur individuelle (AE), une adresse de récepteurs en combinaison dans le bloc d'informations, que l'adresse de récepteurs en combinaison est structurée conformément au contenu en caractères de telle manière qu'avant la retransmission du bloc d'informations à la ligne annulaire (RL), l'adresse de récepteur individuelle (AE) du dispositif (par exemple n,3) effectuant la réception, peut être prélevée dans l'adresse de récepteurs en combinaison et que la ou les autres adresses de récepteurs individuelles (AE) restent conservées dans l'adresse de récepteurs en combinaison, devant être retransmise.

2. Système de transmission suivant la revendication 1, caractérisé par le fait que des copies multiples doivent être retransmises à un récepteur grâce au fait que l'information concernée est répétée, conformément au nombre désiré des copies, dans le dispositif émetteur.

3. Système de transmission suivant la revendication 2, caractérisé par le fait que la répétition est effectuée automatiquement après l'introduction d'un signal correspondant.

4. Système de transmission suivant la revendication 1, caractérisé par le fait que des copies multiples sont a transmettre à un récepteur grâce au fait que l'information concernée est mémorisée dans le dispositif récepteur et que le nombre désiré des copies est reproduit plusieurs fois de façon correspondante.

5. Système de transmission suivant la revendication 4, caractérisé par le fait que les reproductions multiples s'effectuent automatiquement après la réception d'une information supplémentaire correspondante.

6. Système de transfert suivant l'une des revendications précédentes, caractérisé par le fait qu'il est prévu une réception non manipulée par les appareils terminaux d'abonné et que pour la réception non manipulée, un branchement et un débranchement automatiques doivent être réalisés au moyen de l'information reçue.

7. Système de transmission suivant la revendication 1, caractérisé par le fait que la ligne annulaire (RL) est réalisée par la disposition en parallèle de plusieurs lignes à la manière d'une système de transmission à multiplexage spatial.

8. Système de transmission suivant la revendication 1, caractérisé par le fait que la ligne annulaire (RL) fonctionne selon le procédé à multiplexage de fréquences.

9. Système de transmission suivant la revendication 1, caractérisé par le fait que la ligne annulaire (RL) fonctionne selon le procédé de multiplexage temporel.

10. Système de transmission suivant la revendication 1, caractérisé par le fait qu'il est prévu plusieurs lignes annulaires (RLA, RLB, RLC) dans lesquelles des informations peuvent être échangées entre des abonnées (TLN) qui sont raccordés à ces lignes, et qu'il est prévu un poste de transfert (UE) au moyen duquel chaque ligne annulaire (RLA, RLB, RLC) peut communiquer avec chaque autre ligne annulaire.

11. Système de transmission suivant la revendication 1 ou 7 à 10, caractérisé par le fait que la ligne annulaire (RL) ou les lignes annulaires (RLA, RLB, RLC) sont réalisées sous la forme de guides d'ondes de lumière.

## Claims

1. A transmission system for remote-copying and for the electronic transmission of house post having at least one central unit (Z) and a plurality of subscriber terminal units (1, 2, 3... n, n+1, n+2), wherein each individual central unit and each individual subscriber terminal unit has an individually assigned feeding/branching device (AV) by means of which the central units and the subscriber terminal devices are connected to one another via a ring circuit (RL), so that communications in any configurations are rendered possible, and wherein all items of information to be transmitted are constructed in accordance with a predetermined frame grid, where an information block, included in a frame in accordance therewith, possesses a plurality of first sections for at least one receiver address (AE), a plurality of second sections for a transmitter address (AS) and a plurality of sections concerning running items of information (LI), and wherein for information transmission the respective transmitting device (e.g. 2, n+) looks for a time slot and feeds the information block to be transmitted via its assigned feeding/branching device (AV) into the ring circuit (RL), and wherein the feeding/branching device (AV) following in the transport direction of the items of informations branches off the information block and on recognition of its assigned receiver address (AE) removes the information flow and transfers it to the subscriber terminal unit (e.g. n, 3) coupled thereto, or on recognition of a receiver address (AE) not assigned thereto, re-feeds said information flow into the ring circuit (RL), characterised in that for the purpose of transmitting an item of information to a plurality of subscribers a combination receiver address is arranged in the information block instead of an individual receiver address (AE), that in respect of the character content the combination receiver address is so constructed that prior to trans-

6

mission of the information block to the ring circuit (RL), the individual receiver address (AE) of the currently receiving unit (e.g. n, 3) can be removed from the combination receiver address and the further individual receiver addresses (AE) or the further individual receiver address (AE), as the case may be, are or is maintained in the combination receiver address which is to be transmitted.

2. A transmission system as claimed in Claim 1, characterised in that multiple copies are to be transmitted to a receiver in that the respective item of information is repeated in the transmitting unit in accordance with the required number of copies.

3. A transmission system as claimed in Claim 2, characterised in that following the input of an appropriate signal the repetition is automatically carried out.

4. A transmission system as claimed in Claim 1, characterised in that multiple copies are to be transmitted to a receiver in that the respective item of information is stored in the receiving unit and multiply repeated in accordance with the required number of copies.

5. A transmission system as claimed in Claim 4, characterised in that following the reception of an appropriate item of additional information the multiple reproductions are carried out automatically.

6. A transmission as claimed in one of the preceding Claims, characterised in that provision is made for unattended reception by the subscriber terminal units and that for unattended reception an automatic switching on and off operation is effected by the received information.

7. A transmission system as claimed in Claim 1, characterised in that the ring circuit (RL) is constructed by laying a plurality of parallel lines in the manner of a space multiplex transmission system.

8. A transmission system as claimed in Claim 1, characterised in that the ring circuit (RL) is operated in a frequency multiplex process.

9. A transmission system as claimed in Claim 1, characterised in that the ring circuit (RL) is operated in a time multiplex process.

10. A transmission system as claimed in Claim 1, characterised in that a plurality of ring circuits (RLA, RLB, RLC) is provided on which items of information are respectively exchangeable between subscribers (TLN) connected thereto, and a transfer station (UE) is provided by means of which each ring circuit (RLA, RLB, RLC) can communicate with every other ring circuit.

11. A transmission system as claimed in one of Claims 1 or 7 to 10, characterised in that the ring circuit (RL) or the ring circuits (RLA, RLB, RLC) as the case may be, is or are constructed as light wave-guides.

FIG 1

FIG 2